# EUROPÄISCHE PATENTSCHRIFT

(11) **EP 4 043 803 B1**
(45) Veröffentlichungstag und Bekanntmachung des Hinweises auf die Patenterteilung: **23.04.2025**
(21) Anmeldenummer: 21157236.7
(22) Anmeldetag: 15.02.2021
(51) Int. Cl.: F24D 19/10, F16K 1/52

(54) **DURCHFLUSSMENGENREGULIERVORRICHTUNG UND REGULIEREINRICHTUNG HIERFÜR**
FLOW RATE REGULATING APPARATUS AND REGULATING MEANS FOR SAME
DISPOSITIF DE RÉGULATION DE DÉBIT ET AGENCEMENT DE RÉGULATION ASSOCIÉ

(43) Veröffentlichungstag der Anmeldung: 17.08.2022
(73) Patentinhaber: IMI Hydronic Engineering International SA, 1262 Eysins (CH)
(72) Erfinder: Aschenbrenner, Wilhelm, 59609 Anröchte (DE); Perschk, Benjamin, 59555 Lippstadt (DE); Henke, Bernhard, 59929 Brilon (DE)
(74) Vertreter: Zacco Sweden AB

(56) Entgegenhaltungen:
- EP-A1- 2 985 667
- EP-A1- 2 988 071
- WO-A1-2011/006559
- DE-U1- 202015 100 834

## Beschreibung

Die Erfindung betrifft eine Durchflussmengenreguliervorrichtung für eine Heiz- oder Kühlanlage umfassend ein Gehäuse, umfassend einen Zulaufstutzen mit einer Zulauföffnung für ein Heiz- beziehungsweise Kühlmedium als Arbeitsmedium, umfassend ein in dem Gehäuse vorgesehenes Mengenreguliermodul, welches in Abhängigkeit von einer Voreinstellung und einer Druckdifferenz einen Durchfluss für das Arbeitsmedium verändern kann, und umfassend eine Handhabe, welche mit einem beweglich in einem Modulgehäuse des Mengenreguliermoduls angeordneten Reguliereinsatz des Mengenreguliermoduls zusammenwirkt zur Änderung der Voreinstellung, wobei das Mengenreguliermodul einen längsverschiebbar in Bezug zu dem Reguliereinsatz gehaltenen und über eine Regulierfeder des Mengenreguliermoduls gegen den Reguliereinsatz abgestützten Reguliertopf mit einem der Zulauföffnung zugewandten, geschlossenen Topfboden und einem von dem Topfboden abragenden Topfrand sowie eine erste Durchflussöffnung variabler Größe und eine über die Handhabe voreinstellbare zweite Durchflussöffnung vorsieht. Ferner betrifft die Erfindung eine Reguliereinrichtung hierfür.

Eine gattungsgemäße Durchflussmengenreguliervorrichtung ist aus der EP 2 988 071 A1 bekannt. Hierbei ist ein Mengenreguliermodul mit einem Reguliereinsatz und einem Reguliertopf bekannt, welcher federbelastet und längsverschiebbar zu einer Hülse des Mengenreguliermoduls angeordnet ist und positionsabhängig eine Größe einer ersten Durchflussöffnung variiert. Eine Größe einer zweiten Durchflussöffnung kann durch eine Drehstellung des Reguliereinsatzes relativ zu der Hülse eingestellt werden, indem der Reguliereinsatz einen mantelseitig an der Hülse gebildeten Durchbruch für das Arbeitsmedium drehstellungsabhängig mehr oder weniger überdeckt.

Weitere Durchflussmengenreguliervorrichtungen sind aus der DE 10 2009 033 376 B4, der DE 10 2009 061 242 B3 sowie der EP 2 985 667 A1 bekannt.

Aufgabe der vorliegenden Erfindung ist es, eine in Bezug auf die Strömungsverhältnisse verbesserte Durchflussmengenreguliervorrichtung sowie eine Reguliereinrichtung hierfür anzugeben.

Zur Lösung der Aufgabe ist die Erfindung in Verbindung mit dem Oberbegriff des Patentanspruchs 1 dadurch gekennzeichnet, dass die erste Durchflussöffnung als ein erster Durchflussspalt gebildet ist, wobei der erste Durchflussspalt bezogen auf eine Durchflussrichtung des Arbeitsmediums vor dem zweiten Durchflussspalt angeordnet ist und wobei der erste Durchflussspalt zwischen dem Topfrand und einer dem Topfrand zugewandten Innenmantelfläche einer Funktionskomponente des Mengenreguliermoduls gebildet ist, wobei die Innenmantelfläche den Topfrand jedenfalls in einzelnen Regulierstellungen des Mengenreguliermoduls außen- beziehungsweise mantelseitig umgreift.

Der besondere Vorteil der Erfindung besteht darin, dass durch die Realisierung der Durchflussöffnungen als veränderbare Durchflussspalte der Strömungswiderstand für das Arbeitsmedium reduziert werden kann. In der Folge ergibt sich ein günstiges dynamisches Regelverhalten und eine äußerst geringe Schwingungsneigung bei einem sich ändernden Druck des zufließenden Arbeitsmediums. Zu derlei Druckschwankungen kann es während des Betriebs einer Fluidpumpe der Heiz- oder Kühlanlage kommen.

Das Vorsehen des ersten Durchflussspalts zwischen dem Topfrand und der demselben zugewandten Innenmantelfläche begünstigt die kompakte Bauform. In der Folge kann die erfindungsgemäße Durchflussmengenreguliervorrichtung problemlos in bestehende Heiz- oder Kühlanlagen eingebaut werden. Sie baut insofern nicht größer als im Stand der Technik beschriebene Vorrichtungen.

Nach einer bevorzugten Ausführungsform der Erfindung sieht die Durchflussmengenreguliervorrichtung ein Sekundärbetätigungsmodul vor. Das Sekundärbetätigungsmodul umfasst einen relativ zu einem Modulgehäuse des Sekundärbetätigungsmoduls gegen eine Druckfeder längsverschiebbaren Ventilstift und einen an einem dem Mengenreguliermodul zugewandten Ende des Ventilstifts gehaltenen Teller sowie eine an dem Teller festgelegte Dichtung. In Abhängigkeit einer Längsposition des Ventilstifts ist eine Größe des Austrittsspalts für das Arbeitsmedium bestimmt. Der Austrittsspalt ist zwischen der Dichtung des Sekundärbetätigungsmoduls und einem Betätigungsring des Mengenreguliermoduls gebildet, wobei der Betätigungsring mit der Handhabe wirkverbunden ist und der Einstellung einer Größe des zweiten Durchflussspalts dient.

Der Ventilstift kann beispielsweise mit einem nicht zum Sekundärbetätigungsmodul gehörenden Temperaturfühler verbunden werden. In diesem Fall ist das Sekundärbetätigungsmodul als ein Temperaturregelmodul ausgebildet, wobei die Längsposition des Ventilstifts relativ zum Modulgehäuse durch einen Temperaturmesswert des Temperaturfühlers bestimmt ist. Die Handhabe kann als Teil des Temperaturregelmoduls ausgebildet sein. Beispielsweise kann ein Rücklauftemperaturbegrenzer als Sekundärbetätigungsmodul vorgesehen sein. Beispielsweise kann das Sekundärbetätigungsmodul mit einer elektromotorischen Betätigungseinheit zusammenwirken und der zeitgesteuerten Einstellung der Größe des Austrittsspalts dienen.

Die Durchflussmengenreguliervorrichtung kann insofern zwei wesentliche Funktionsmodule umfassen: das Mengenreguliermodul sowie das Sekundärbetätigungsmodul. Der modulare Aufbau begünstigt eine wirtschaftliche Fertigung und eine einfache Montage. Darüber hinaus reduziert der modulare Aufbau den Wartungs- und Installationsaufwand und insbesondere der Austausch defekter Funktionskomponenten vereinfacht sich.

Das Mengenreguliermodul mit den zwei Durchflussspalten dient dazu, einen Zieldurchflusswert beispielsweise für eine Raumtemperatur einzustellen und eine Durchflussmenge des Arbeitsmediums an den Bedarf desselben anzupassen. Die Voreinstellung des Zieldurchflusses wird durch die Einstellung der Größe des zweiten Durchflussspalts über die Handhabe bewirkt. Hier ist insbesondere eine rotatorische Betätigung der Handhabe vorgesehen. Die Größe des ersten Durchflussspalts wird beeinflusst von der Druckdifferenz des Arbeitsmediums im Zulaufstutzen einerseits und nach dem Durchströmen des zweiten Durchflussspalts andererseits.

Das Sekundärbetätigungsmodul beeinflusst über die Größe des Austrittsspalts ebenfalls die Durchflussmenge des Arbeitsmediums. Sofern das Sekundärbetätigungsmodul als Temperaturregelmodul ausgebildet ist, wird die aktuelle Ist-Raumtemperatur als Temperaturmesswert des Temperaturfühlers bestimmt. In Abhängigkeit der Ist-Raumtemperatur beeinflusst dann die Längsposition des Ventilstifts die Größe des Austrittsspalts.

Nach einer Weiterbildung der Erfindung sind der erste Durchflussspalt und/oder der zweite Durchflussspalt koaxial zueinander und/oder zu einer Längsmittelachse der Durchflussmengenreguliervorrichtung und/oder des Mengenreguliermoduls angeordnet. Vorteilhaft wird durch die koaxiale Anordnung der Durchflussspalte, die Drosselstellen für das Arbeitsmedium darstellen, der Strömungswiderstand beim Durchströmen des Mengenreguliermoduls weiter reduziert.

Nach einer Weiterbildung der Erfindung verjüngt sich die dem Topfrand zugewandte Innenmantelfläche in die Durchflussrichtung des Arbeitsmediums, wohingegen eine durch den Topfrand gebildete, der Innenmantelfläche zugewandte Außenmantelfläche des Reguliertopfs bevorzugt zylindrisch ausgebildet ist. Bevorzugt verjüngt sich die Innenmantelfläche in die Durchflussrichtung konisch. Vorteilhaft kann durch die Formgebung der Innenmantelfläche und der ihr zugewandten Außenmantelfläche die Größe des Durchflussspalts in Abhängigkeit einer Längsverstellposition des Reguliertopfs sehr exakt und feinfühlig eingestellt werden.

Nach einer Weiterbildung der Erfindung sind der erste Durchflussspalt und/oder der zweite Durchflussspalt ringförmig als ein erster Ringspalt und/oder als ein zweiter Ringspalt ausgebildet. Der erste und/oder der zweite Ringspalt können eine senkrecht zu einer Umfangsrichtung bestimmte konstante oder nicht-konstante Breite aufweisen.

Nach einer Weiterbildung der Erfindung sind der erste Durchflussspalt und/oder der zweite Durchflussspalt segmentiert und bevorzugt ringsegmentförmig ausgebildet. Die in die Umfangsrichtung bestimmte Breite des ersten Durchflussspalts und/oder des zweiten Durchflussspalts kann konstant sein oder variieren.

In einer Weiterbildung der Erfindung ist die Innenmantelfläche profiliert ausgebildet. Bevorzugt sind zur Profilierung der Innenmantelfläche an eben dieser Ausformungen vorgesehen. Die Ausformungen können in die Umfangsrichtung regelmäßig verteilt angeordnet sein und/oder der Segmentierung des ersten Durchflussspalts dienen.

Nach einer Weiterbildung der Erfindung sind die Ausformungen keilförmig ausgebildet und/oder weisen einen dreieckigen Querschnitt auf. Bevorzugt ist der zwischen der Innenmantelfläche und dem Reguliertopf gebildete erste Durchflussspalt durch die Ausformungen segmentiert und weist eine nicht-konstante Breite auf.

Nach einer Weiterbildung der Erfindung sieht der Reguliereinsatz eine Durchgangsbohrung vor, welche einen bezogen auf die Durchflussrichtung des Arbeitsmediums hinter dem zweiten Durchflussspalt angeordneten Fluidraum mit einem Innenraum des Reguliertopfs verbindet. Insbesondere ist die Durchgangsbohrung in die Durchflussrichtung des Arbeitsmediums längserstreckt. Vorteilhaft gelingt es durch das Vorsehen der Durchgangsbohrung, den Druck des zufließenden Arbeitsmediums einerseits gegen die Federkraft der Regulierfeder und den Druck des Arbeitsmediums nach dem Durchströmen des zweiten Durchflussspalts andererseits wirken zu lassen. Hierdurch ergibt sich eine selbsttätige Einstellung der Größe des ersten Durchflussspalts in Abhängigkeit des Drucks des zufließenden Arbeitsmediums mit der Folge, dass Druckschwankungen in einer Zulaufleitung ausgeglichen werden.

Nach einer Weiterbildung der Erfindung ist das Modulgehäuse des Mengenreguliermoduls mehrteilig ausgebildet. Es sieht eine äußere Modulgehäusehülse und einen Gehäuseeinsatz vor, welcher von der Modulgehäusehülse mantelseitig jedenfalls abschnittsweise umgriffen ist.

Beispielsweise stellt der Gehäuseeinsatz als Funktionskomponente des Mengenreguliermoduls die Innenmantelfläche bereit. Vorteilhaft kann das mehrteilige Modulgehäuse einfach und kostengünstig gefertigt werden. Während die Modulgehäusehülse als formgebendes Bauteil des Mengenreguliermoduls dient und aufgrund der einfachen Geometrie einfach zu fertigen ist, kann der Gehäuseeinsatz mit der exakt zu fertigenden Innenmantelfläche getrennt hergestellt werden. Beispielsweise kann der Gehäuseeinsatz spanend, urformend oder durch ein additives Fertigungsverfahren hergestellt werden.

Nach einer Weiterbildung der Erfindung ist der Reguliereinsatz abschnittsweise kegelförmig ausgeformt. Der zweite Durchflussspalt ist zwischen der kegelförmigen Ausformung des Reguliereinsatzes und dem Modulgehäuse des Mengenreguliermoduls gebildet. Bevorzugt ist der zweite Durchflussspalt zwischen der kegelförmigen Ausformung und dem Gehäuseeinsatz des Modulgehäuses gebildet. Der Gehäuseeinsatz definiert insofern den ersten und den zweiten Durchflussspalt.

Nach einer Weiterbildung der Erfindung sieht der Reguliereinsatz eine Mehrzahl von über Stege gehaltenen Gewinderingsegmenten vor, wobei die Gewinderingsegmente ein Außengewinde aufweisen, welches in ein korrespondierend geformtes Innengewinde des Mengenreguliermoduls eingreift. Bevorzugt stellt der Gehäuseeinsatz des Modulgehäuses das Innengewinde des Mengenreguliermoduls bereit. Zwischen benachbarten Stegen beziehungsweise benachbarten Gewinderingsegmenten des Reguliereinsatzes sind Eingriffsausnehmungen vorgesehen. Von dem Betätigungsring des Mengenreguliermoduls abragende Betätigungsfinger greifen in diese Eingriffsausnehmungen ein zur Übertragung einer Betätigungsbewegung der Handhabe auf den Reguliereinsatz.

Nach einer Weiterbildung der Erfindung sind der Zulaufstutzen und/oder die Zulauföffnung und/oder der erste Durchflussspalt und/oder der zweite Durchflussspalt und/oder der Austrittsspalt und/oder der Reguliereinsatz und/oder die Durchgangsbohrung und/oder der Reguliertopf und/oder der Topfrand und/oder die Regulierfeder und/oder der Betätigungsring und/oder die Modulgehäusehülse und/oder der Gehäuseeinsatz und/oder der Ventilstift und/oder die Druckfeder und/oder der Teller und/oder die Dichtung und/oder die Handhabe koaxial zueinander und/oder zu der Längsmittelachse angeordnet.

Zur Lösung der Aufgabe weist die Erfindung die Merkmale des Patentanspruchs 15 auf. Demzufolge umfasst eine Reguliereinrichtung für die erfindungsgemäße Durchflussmengenreguliervorrichtung das Mengenreguliermodul sowie das Sekundärbetätigungsmodul, welches insbesondere als Temperaturregelmodul ausgebildet ist und die Handhabe vorsieht. Vorteilhaft können insbesondere bestehende Heiz- oder Kühlanlagen in einfacher Weise umgebaut beziehungsweise modernisiert werden, indem eine vorhandene Reguliereinrichtung aus einem Gehäuse einer vorhandenen Durchflussmengenreguliervorrichtung entfernt und die erfindungsgemäße Reguliereinrichtung in das vorhandene Gehäuse eingebaut wird. Die Anschlussmaße der erfindungsgemäßen Reguliereinrichtung können dabei an die Maße vorhandener Reguliereinrichtungen angepasst werden.

Die erfindungsgemäße Durchflussmengenreguliervorrichtung sowie der erfindungsgemäße Reguliereinsatz können beispielsweise in einer Fußboden-Heiz- oder Kühlanlage verwendet werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Durchflussmengenreguliervorrichtung gelten selbstverständlich auch im Zusammenhang mit der Reguliereinrichtung und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung. Sie haben keinen einschränkenden Charakter.

Es zeigen:
- Fig. 1: einen Längsschnitt durch eine erste Ausführungsform einer erfindungsgemäßen Durchflussmengenreguliervorrichtung mit einem Gehäuse, mit einem Temperaturregelmodul als einem Sekundärbetätigungsmodul und mit einem Mengenreguliermodul in einer ersten Regulierstellung,
- Fig. 2: eine perspektivische Schnittdarstellung einer das Temperaturregelmodul und das Mengenreguliermodul vorsehenden Reguliereinrichtung der erfindungsgemäßen Durchflussmengenreguliervorrichtung nach Fig. 1 in der ersten Regulierstellung,
- Fig. 3: einen Längsschnitt durch die Reguliereinrichtung der erfindungsgemäßen Durchflussmengenreguliervorrichtung nach Fig. 2 in einer zweiten Regulierstellung,
- Fig. 4: eine perspektivische Darstellung der Reguliereinrichtung nach den Fig. 2 und 3,
- Fig. 5: einen Schnitt A-A durch das Mengenreguliermodul einer erfindungsgemäßen Reguliereinrichtung in einer zweiten Ausführungsform und
- Fig. 6: einen Längsschnitt durch das Mengenreguliermodul der Reguliereinrichtung nach Fig. 5.

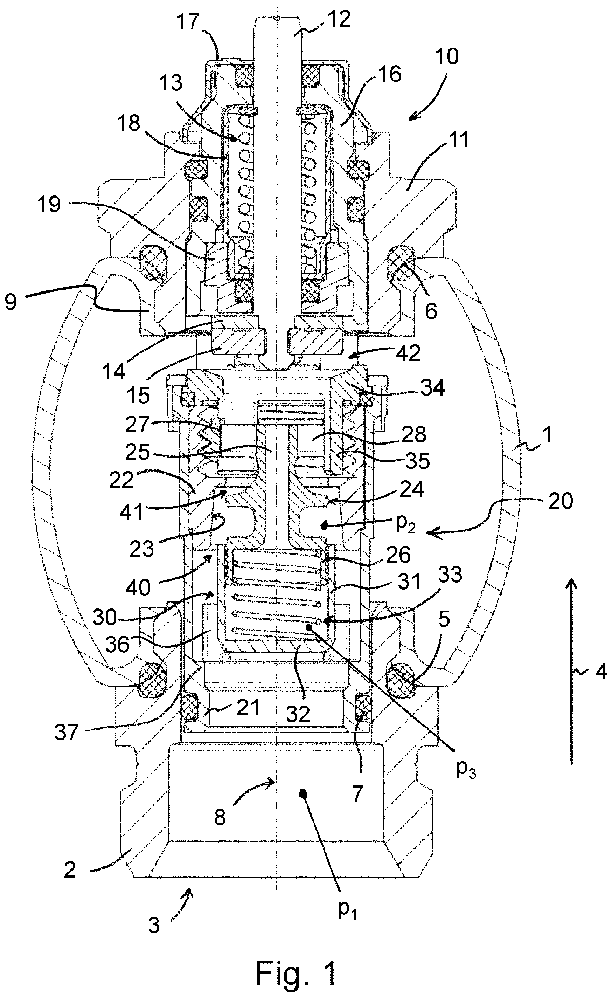

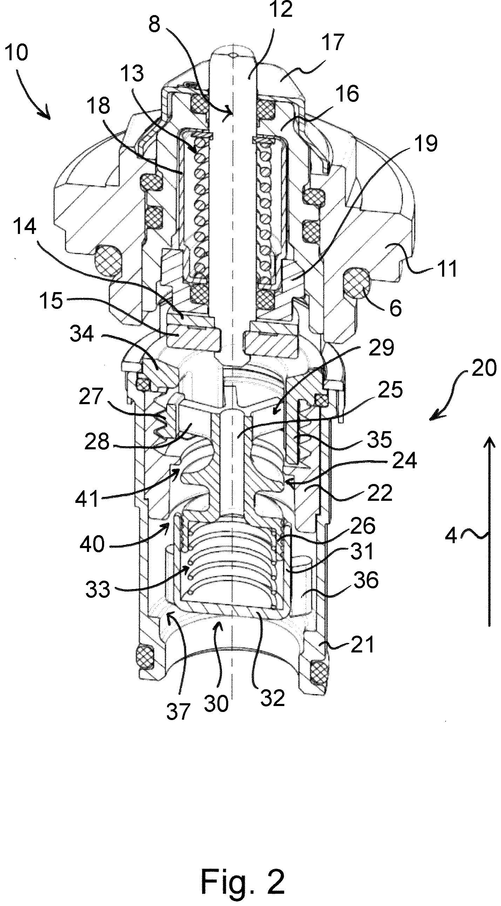

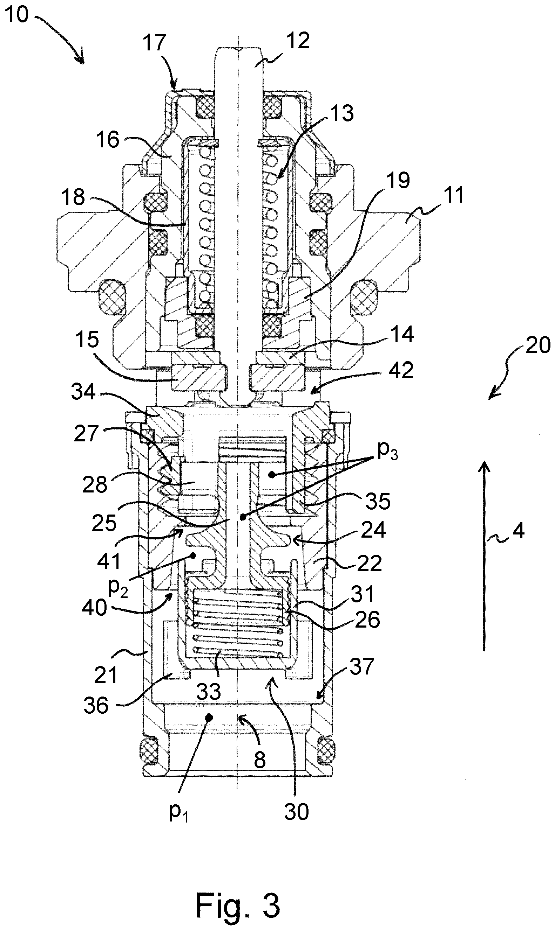

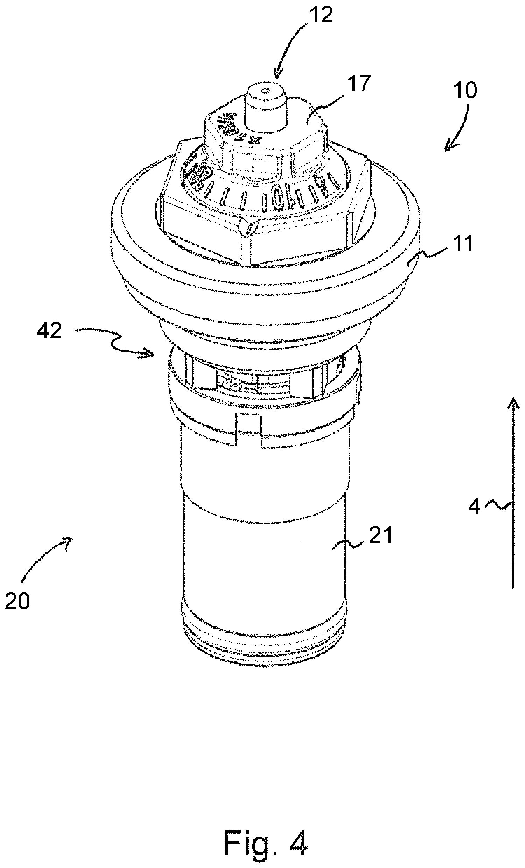

Eine Durchflussmengenreguliervorrichtung beziehungsweise eine Reguliereinrichtung hierfür sind in den Fig. 1 bis 4 dargestellt. Die Durchflussmengenreguliervorrichtung umfasst ein Gehäuse 1 mit einem Voreinstellstutzen 9, einen an dem Gehäuse 1 festgelegten Zulaufstutzen 2 mit einer Zulauföffnung 3 sowie die erfindungsgemäße Reguliereinrichtung mit einem Mengenreguliermodul 20 und einem Sekundärbetätigungsmodul, welches vorliegend exemplarisch als ein Temperaturregelmodul 10 ausgebildet ist. Der Zulaufstutzen 2 ist über eine Dichtung 5 gegen das Gehäuse 1 gedichtet. Ein Modulgehäuse 11 des Temperaturregelmoduls 10 ist über eine Dichtung 6 gegen das Gehäuse 1 der Durchflussmengenreguliervorrichtung gedichtet. Eine weitere Dichtung 7 ist zwischen dem Zulaufstutzen 2 und dem Mengenreguliermodul 20 der Reguliereinrichtung vorgesehen.

Das Temperaturregelmodul 10 umfasst ein Modulgehäuse 11. Es sieht einen gegen eine Druckfeder 13 längsverschiebbar zu dem Modulgehäuse 11 angeordneten Ventilstift 12, einen an einem dem Mengenreguliermodul 20 zugewandten Ende des Ventilstifts 12 gehaltenen Teller 14 sowie eine an dem Teller 14 gehaltene Dichtung 15 vor. Die Feder 12 ist in einer Hülse 18 angeordnet, durch die der Ventilstift 12 stirnseitig hindurchgeführt ist.

Die Hülse 18 wird von der Handhabe 16 umgriffen. Die Handhabe 16 ist drehbar um eine Längsmittelachse 8 in dem Modulgehäuse 11 des Temperaturregelmoduls 10 vorgesehen. Der Ventilstift 12 und die Handhabe 16 greifen durch den Voreinstellstutzen 9 in das Gehäuse 1 der Durchflussmengenreguliervorrichtung ein.

Über einen Führungsring 19 sind der Stift 12 sowie die Hülse 18 mit der Druckfeder 13 an der Handhabe 16 gehalten. Eine Kappe 17 umgreift die Handhabe 16 an einem dem Teller 14 sowie der Dichtung 15 abgewandten Ende des Temperaturregelmoduls 10. Die Kappe 17 sieht dabei stirnseitig eine Ausnehmung vor, durch die hindurch der Ventilstift 12 nach außen geführt ist.

Der Ventilstift 12 kann mit einem an der Reguliereinrichtung beziehungsweise die Durchflussmengenreguliervorrichtung anbaubaren, handelsüblichen und in den Figuren nicht dargestellten Temperaturfühler verbunden werden. Über den Temperaturfühler kann eine Längsposition des Ventilstifts 12 beeinflusst werden. Der Ventilstift 12 wird dabei gegen die Druckfeder 13 bewegt, welche als Zylinderfeder gegen die Hülse 18 einerseits und über einen Sprengring gegen den Ventilstift 12 andererseits verspannt ist.

Das mit dem Temperaturregelmodul 10 gekoppelte Mengenreguliermodul 20 sieht ein mehrteiliges Modulgehäuse mit einer äußeren Modulgehäusehülse 21 und einem ringförmigen beziehungsweise hohlzylindrischen Gehäuseeinsatz 22 vor, welcher von der Modulgehäusehülse 21 mantelseitig umgriffen ist. Darüber hinaus ist ein Reguliereinsatz 24 vorgesehen, welcher von der Modulgehäusehülse 21 umgriffen wird und abschnittsweise in den Gehäuseeinsatz 22 hineinragt.

Der Reguliereinsatz 24 sieht an einem dem Temperaturregelmodul 10 abgewandten Ende eine Topfführung 26 vor, über die ein Reguliertopf 30 des Mengenreguliermoduls 20 längsverschiebbar an dem Reguliereinsatz 24 abgestützt ist. Der Reguliertopf 30 sieht einen der Zulauföffnung 3 zugewandten Topfboden 32 sowie einen hiervor in Richtung des Reguliereinsatzes 24 abragenden Topfrand 31 vor. In dem Reguliertopf 30 ist eine Regulierfeder 33 vorgesehen, über die der Reguliertopf 30 gegen den Reguliereinsatz 24 abgestützt ist.

Der Reguliereinsatz 24 sieht eine Mehrzahl von in einer Umfangsrichtung verteilt angeordneten Gewinderingsegmenten 27 vor, welche über Stege 28 gehalten sind. Zwischen benachbarten Stegen 28 beziehungsweise benachbarten Gewinderingsegmenten 27 des Reguliereinsatzes 24 sind Eingriffsausnehmungen 29 gebildet. Die Gewinderingsegmente 27 sehen ein Außengewinde vor, welches in ein korrespondierend geformtes Innengewinde des Mengenreguliermoduls 20 eingreift. Das Innengewinde ist dabei im vorliegenden Ausführungsbeispiel der Erfindung an dem Gehäuseeinsatz 22 des Modulgehäuses vorgesehen.

Die Modulgehäusehülse 21, der Gehäuseeinsatz 22, der Reguliereinsatz 23, der Reguliertopf 30 sowie die Regulierfeder 33 des Mengenreguliermoduls 20 und der Ventilstift 12, die Druckfeder 13, der Teller 14, die Dichtung 15, die Handhabe 16, die Hülse 18 sowie der Führungsring 19 des Temperaturregelmoduls 10 sind koaxial zu der Längsmittelachse 8 angeordnet.

Das Mengenreguliermodul 20 sieht darüber hinaus einen Betätigungsring 34 vor, welcher ebenfalls koaxial zu der Längsmittelachse 8 angeordnet und der Dichtung 15 des Temperaturregelmoduls 10 zugewandt ist. Von dem Betätigungsring 34 ragen in Richtung des Reguliereinsatzes 24 Betätigungsfinger 35 ab. Die Betätigungsfinger 35 greifen in die an dem Reguliereinsatz 24 gebildeten Eingriffsausnehmungen 29 ein. Der Betätigungsring 34 ist wirkverbunden mit der Handhabe 16. Eine Drehbewegung der Handhabe 16 wird insofern über den Betätigungsring 34 und die Betätigungsfinger 35 auf den Reguliereinsatz 24 übertragen. Infolge des Gewindes wird die Rotation der Handhabe 16 in eine Längsverschiebung des Reguliereinsatzes 24 in die Richtung der Längsmittelachse 8 umgesetzt.

An einem der Zulauföffnung 3 zugewandten Ende ist an dem Reguliertopf 30 eine Mehrzahl von nach außen abragenden Anschlägen 36 gebildet. Die Anschläge 36 sind so gestaltet, dass sie in einer in der Fig. 1 dargestellten ersten Regulierstellung des Mengenreguliermoduls 20, in der sich der Reguliertopf 30 in einer ersten Endstellung befindet, gegen eine an der Modulgehäusehülse 21 innenliegend gebildeten Stufe 37 angelegt sind. Der an der Modulgehäusehülse 21 gebildeten Stufe 37 gegenüberliegend ist der Gehäuseeinsatz 22 vorgesehen. Der Gehäuseeinsatz 22 bildet zusammen mit der Modulgehäusehülse 21 eine weitere Stufe, gegen die der Reguliertopf 30 mit den Anschlägen 36 in einer zweiten Endstellung desselben angelegt ist.

Die Zuordnung des Mengenreguliermoduls 20 zu dem Temperaturregelmodul 10 erfolgt so, dass zwischen der Dichtung 15 des Temperaturregelmoduls 10 und dem als Ventilsitz dienenden Betätigungsring 34 des Mengenreguliermoduls 20 ein Austrittsspalt 42 für ein Arbeitsmedium gebildet ist, welches über die Zulauföffnung 3 in die Durchflussmengenreguliervorrichtung einströmt und im Weiteren das Mengenreguliermodul 20 durchströmt. In dem Mengenreguliermodul 20 sind dabei ein als erste Durchflussöffnung dienender erster ringförmiger Durchflussspalt 40 sowie ein zweiter ringförmiger Durchflussspalt 41 als eine zweite Durchflussöffnung für das Arbeitsmedium und als Ringspalte 40, 41 gebildet. Der zweite Durchflussspalt 41 ist dabei bezogen auf eine Durchflussrichtung 4 des Arbeitsmediums hinter dem ersten Durchflussspalt 40 angeordnet.

Der erste Durchflussspalt 40 ist koaxial zu der Längsmittelachse 8 und koaxial zu dem zweiten Durchflussspalt 41 vorgesehen. Er ist gebildet zwischen einer zylindrischen Außenmantelfläche des Reguliertopfs 30 im Bereich des Topfrands 31 einerseits und einer Innenmantelfläche 23, die dem Topfrand 31 mit der Außenmantelfläche zugewandt ist und an dem Gehäuseeinsatz 22 gebildet wird, und im Wesentlichen radial erstreckt. Die Innenmantelfläche 23 verjüngt sich dabei in die Durchflussrichtung 4 des Arbeitsmediums konisch mit der Folge, dass durch eine Verschiebung des Reguliertopfs 30 in die Richtung der Längsmittelachse 8 eine Größe beziehungsweise ein Öffnungsmaß des ersten Durchflussspalts 40 variiert.

Der zweite Durchflussspalt 41 ist zwischen dem Reguliereinsatz 24 und dem Gehäuseeinsatz 22 gebildet und im Wesentlichen axial erstreckt. Der Reguliereinsatz 24 ist hierzu abschnittsweise kegelförmig ausgeformt. Eine Größe des zwischen der kegelförmigen Ausformung des Reguliereinsatzes 24 und dem Gehäuseeinsatz 22 des Modulgehäuses gebildeten zweiten Durchflussspalts 41 kann durch die Längsstellung des Reguliereinsatzes 24 und insofern über die Drehstellung der Handhabe 16 eingestellt beziehungsweise verändert werden. Insofern ist es möglich, über die Drehstellung der Handhabe 16 einen Grunddurchfluss durch das Mengenreguliermodul 20 zu definieren. Der Grunddurchfluss korrespondiert zu einer Raumzieltemperatur der Heiz- oder Kühlanlage.

Um Druckschwankungen des Arbeitsmediums in einer an dem Zulaufstutzen 2 angeschlossenen Zulaufleitung auszugleichen, stellt sich die Größe des ersten Durchflussspalts 40 druckabhängig ein. Insofern sieht der Reguliereinsatz 24 eine Durchgangsbohrung 25 vor, welche von einem hinter dem zweiten Durchflussspalt 41 gebildeten Fluidraum bis ins Innere des Reguliertopfs 30 geführt ist. Gelangt nun das Arbeitsmedium mit einem Druck p₁ in den Zulaufstutzen 2, kommt es beim Durchströmen des ersten Durchflussspalts 40 zu einem Druckabfall mit der Folge, dass sich hinter dem ersten Durchflussspalt 40 ein Druck p₂ für das Arbeitsmedium einstellt. Der Druck wird beim Durchströmen des zweiten Durchflussspalts 41 abermals reduziert mit der Folge, dass in dem Fluidraum und damit auch im Inneren des Reguliertopfs 30 das Arbeitsmedium den nochmals reduzierten Druck p₃ aufweist. Infolge der Druckdifferenz der auf gegenüberliegenden Seiten des Topfbodens 32 herrschenden Drücke p₁, p₃ und unter Berücksichtigung einer Federkonstanten der Regulierfeder 33 stellt sich nun die Relativposition des Reguliertopfs 30 zum Reguliereinsatz 24 druck- beziehungsweise durchflussabhängig selbsttätig ein.

Eine Größe des Austrittsspalts 42 ist schließlich durch den Abstand der Dichtung 15 des Temperaturregelmoduls 10 von dem als Ventilsitz dienenden Betätigungsring 34 abhängig. Hier ist es so, dass der Ventilstift 12 abhängig von einem Temperaturmesswert des nicht dargestellten Temperaturfühlers in Richtung der Längsmittelachse 8 verschoben wird. Abhängig von einer Differenz von einer vorgegebenen Raumzieltemperatur und einer Ist-Raumtemperatur variiert demzufolge die Größe des Austrittsspalts 42 und damit die Menge des Arbeitsmediums, welches die Durchflussmengenreguliervorrichtung durchströmt.

Im vorliegenden Ausführungsbeispiels ist das Sekundärbetätigungsmodul lediglich exemplarisch als Temperaturregelmodul 10 ausgebildet. Beispielsweise kann das Sekundärbetätigungsmodul mit einer elektromotorischen Betätigungseinheit zusammenwirken zur zeitgesteuerten Einstellung der Größe des Austrittsspalts 42 oder es kann ein Rücklauftemperaturbegrenzer als Sekundärbetätigungsmodul vorgesehen sein. Beispielsweise kann die erfindungsgemäße Durchflussmengenreguliervorrichtung ohne das Sekundärbetätigungsmodul ausgebildet sein.

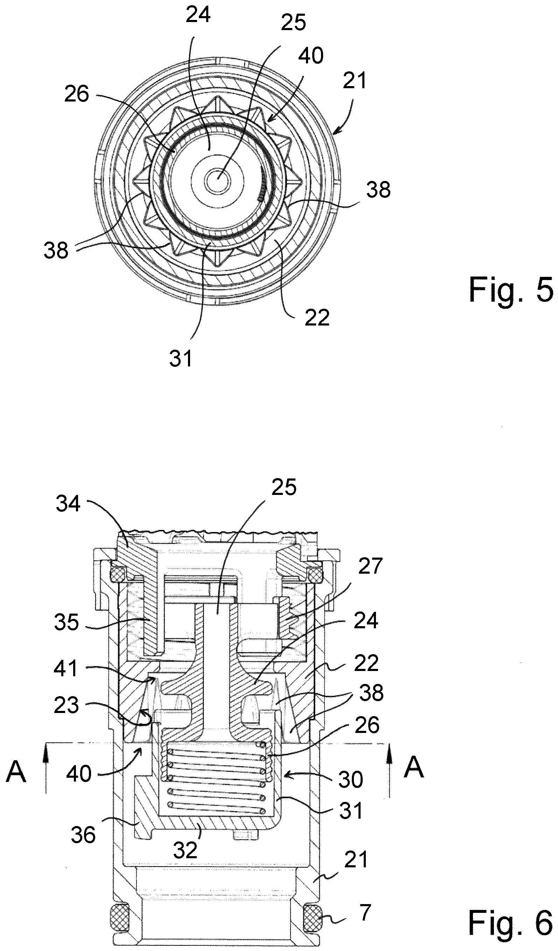

Die Figuren 5 und 6 zeigen eine zweite Ausführungsform der erfindungsgemäßen Durchflussmengenreguliervorrichtung mit einem modifizierten Mengenreguliermodul 20. Das Mengenreguliermodul 20 sieht an der Innenmantelfläche 23 des Gehäuseeinsatzes 22 dem Reguliereinsatz 24 zugewandte keilförmige Ausformungen 38 vor. Die regelmäßig gebildeten und in Umfangsrichtung der Innenmantelfläche 23 gleichmäßig beabstandet angeordneten Keilausformungen 38 verjüngen sich keilförmig in die Durchflussrichtung 4. Der erste Durchflussspalt 40, der zwischen der Innenmantelfläche 23 mit den Keilausformungen 38 einerseits und der Außenmantelfläche des Reguliertopfs 30 andererseits gebildet ist, ist durch die Keilausformungen 38 segmentiert beziehungsweise weist eine senkrecht zu der Umfangsrichtung bestimmte, nicht-konstante Breite auf.

Soweit in dem zweiten Ausführungsbeispiel der Durchflussmengenreguliervorrichtung die Keilausformungen 38 regelmäßig geformt sind und/oder die Keilausformungen 38 in die Umfangsrichtung der Innenmantelfläche 23 gleichmäßig verteilt beziehungsweise gleichmäßig beabstandet angeordnet sind, ist dies lediglich eine beispielhafte Ausgestaltung. Die Ausformungen können unregelmäßig geformt und/oder ungleichmäßig verteilt angeordnet sein. Auch die Keilform der Ausformungen ist beispielhaft.

Gleiche Bauteile und Bauteilfunktionen sind durch gleiche Bezugszeichen gekennzeichnet.

## Patentansprüche

1. Durchflussmengenreguliervorrichtung für eine Heiz- oder Kühlanlage umfassend ein Gehäuse (1), umfassend einen Zulaufstutzen (2) mit einer Zulauföffnung (3) für ein Arbeitsmedium, umfassend ein in dem Gehäuse (1) vorgesehenes Mengenreguliermodul (20), welches in Abhängigkeit von einer Voreinstellung und einer Druckdifferenz einen Durchfluss für das Arbeitsmedium verändern kann, und umfassend eine Handhabe (16), welche mit einem beweglich in einem Modulgehäuse des Mengenreguliermoduls (20) angeordneten Reguliereinsatz (24) des Mengenreguliermoduls (20) zusammenwirkt zur Änderung der Voreinstellung, wobei das Mengenreguliermodul (20) einen längsverschiebbar in Bezug zu dem Reguliereinsatz (24) gehaltenen und über eine Regulierfeder (33) des Mengenreguliermoduls (20) gegen den Reguliereinsatz (24) abgestützten Reguliertopf (30) mit einem der Zulauföffnung zugewandten, geschlossenen Topfboden (32) und einem von dem Topfboden (32) abragenden Topfrand (31) sowie eine erste Durchflussöffnung variabler Größe und eine über die Handhabe (6) voreinstellbare zweite Durchflussöffnung vorsieht, wobei die zweite Durchflussöffnung als ein zweiter Durchflussspalt (41) gebildet ist,
**dadurch gekennzeichnet**
**dass** die erste Durchflussöffnung als ein erster Durchflussspalt (40) gebildet ist, wobei der erste Durchflussspalt (40) bezogen auf eine Durchflussrichtung (4) des Arbeitsmediums vor dem zweiten Durchflussspalt (41) angeordnet ist und wobei der erste Durchflussspalt (40) zwischen dem Topfrand (31) und einer dem Topfrand (31) zugewandten Innenmantelfläche (23) einer Funktionskomponente des Mengenreguliermoduls (20) gebildet ist.

2. Durchflussmengenreguliervorrichtung nach Anspruch 1, **dadurch gekennzeichnet, dass** die Innenmantelfläche (23) sich in die Durchflussrichtung (4) des Arbeitsmediums verjüngt, wobei die Innenmantelfläche (23) bevorzugt konisch ausgebildet ist, und/oder dass die Innenmantelfläche (23) profiliert ausgebildet ist, wobei zur Profilierung der Innenmantelfläche (23) an ebendieser bevorzugt Ausformungen und besonders bevorzugt Keilausformungen (38) vorgesehen sind.

3. Durchflussmengenreguliervorrichtung nach Anspruch 1 oder 2, **dadurch gekennzeichnet, dass** der erste Durchflusspalt (40) und/oder der zweite Durchflussspalt (41) als ein erster Ringspalt und/oder als ein zweiter Ringspalt ausgebildet sind und/oder dass der erste Durchflusspalt (40) und/oder der zweite Durchflussspalt (41) koaxial zueinander angeordnet sind und/oder dass der erste Durchflusspalt (40) und/oder der zweite Durchflussspalt (41) ringsegmentförmig ausgebildet sind und/oder durch eine Mehrzahl von Ringsegmenten gebildet sind.

4. Durchflussmengenreguliervorrichtung nach einem der Ansprüche 1 bis 3, **dadurch gekennzeichnet, dass** der Reguliereinsatz (24) eine Durchgangsbohrung (25) vorsieht, welche von einem bezogen auf die Durchflussrichtung (4) des Arbeitsmediums hinter dem zweiten Durchflussspalt (41) angeordneten Fluidraum zu einem Innenraum des Reguliertopfs (30) geführt ist, und/oder dass die Durchgangsbohrung (25) in die Durchflussrichtung (4) längserstreckt ist.

5. Durchflussmengenreguliervorrichtung nach einem der Ansprüche 1 bis 4, **dadurch gekennzeichnet, dass** eine durch den Topfrand (31) gebildete, der Innenmantelfläche (23) zugewandte Außenmantelfläche des Reguliertopfs (30) zylindrisch geformt ist und/oder dass die Regulierfeder (33) in dem Reguliertopf (30) vorgesehen ist und der Topfrand (31) die Regulierfeder (33) mantelseitig umgreift.

6. Durchflussmengenreguliervorrichtung nach einem der Ansprüche 1 bis 5, **dadurch gekennzeichnet, dass** das Modulgehäuse des Mengenreguliermoduls (20) mehrteilig ausgebildet ist und eine äußere Modulgehäusehülse (21) und einen Gehäuseeinsatz (22) vorsieht, wobei die Modulgehäusehülse (21) den Gehäuseeinsatz (22) jedenfalls abschnittsweise mantelseitig umgreift und/oder der Gehäuseeinsatz (22) als Funktionskomponente des Mengenreguliermoduls (20) die Innenmantelfläche (23) bereitstellt.

7. Durchflussmengenreguliervorrichtung nach Anspruch 6, **dadurch gekennzeichnet, dass** der Reguliereinsatz (24) abschnittsweise kegelförmig ausgeformt ist und der zweite Durchflussspalt (41) zwischen der kegelförmigen Ausformung des Reguliereinsatzes (24) und dem Modulgehäuse des Mengenreguliermoduls (20) gebildet ist und/oder dass der zweite Durchflussspalt (41) zwischen der kegelförmigen Ausformung des Reguliereinsatzes (24) und dem Gehäuseeinsatz (22) gebildet ist.

8. Durchflussmengenreguliervorrichtung nach einem der Ansprüche 1 bis 7, **dadurch gekennzeichnet, dass** der Reguliereinsatz (24) eine Mehrzahl von über Stege (28) gehaltenen Gewinderingsegmente (27) vorsieht, wobei die Gewinderingsegmente (27) ein in ein korrespondierend geformtes Innengewinde des Mengenreguliermoduls (20) eingreifendes Außengewinde vorsehen und wobei zwischen benachbarten Stegen (28) und/oder benachbarten Gewinderingsegmenten (27) des Reguliereinsatzes (24) Eingriffsausnehmungen (29) vorgesehen sind, und/oder dass das Mengenreguliermodul (20) einen an dem Modulgehäuse abgestützten Betätigungsring (34) mit hiervor abragenden Betätigungsfingern (35) vorsieht, wobei der Betätigungsring (34) mit der Handhabe (16) wirkverbunden ist und die Betätigungsfinger (35) in die Eingriffsausnehmungen (29) eingreifen zur Übertragung einer Betätigung der Handhabe (16) auf den Reguliereinsatz (24).

9. Durchflussmengenreguliervorrichtung nach einem der Ansprüche 1 bis 8, **dadurch gekennzeichnet, dass** der Gehäuseeinsatz (22) des Modulgehäuses das Innengewinde des Mengenreguliermoduls (20) bereitstellt.

10. Durchflussmengenreguliervorrichtung nach einem der Ansprüche 1 bis 9, **dadurch gekennzeichnet, dass** ein Sekundärbetätigungsmodul vorgesehen ist, welches einen relativ zu einem Modulgehäuse (11) des Sekundärbetätigungsmoduls gegen eine Druckfeder (13) längsverschiebbaren Ventilstift (12) und einen an einem dem Mengenreguliermodul (20) zugewandten Ende des Ventilstifts (12) gehaltenen Teller (14) sowie eine an dem Teller (14) festgelegte Dichtung (15) vorsieht, wobei ein Austrittsspalt (42) zwischen der Dichtung (15) des Temperaturregelmoduls (10) und dem Betätigungsring (34) des Mengenreguliermoduls (20) gebildet ist und wobei in Abhängigkeit einer Längsposition des Ventilstifts (12) eine Größe des Austrittsspalts (42) einstellbar ist.

11. Durchflussmengenreguliervorrichtung nach Anspruch 10, **dadurch gekennzeichnet, dass** ein Temperaturregelmodul (10) als Sekundärbetätigungsmodul vorgesehen ist, wobei der Ventilstift (12) mit einem Temperaturfühler verbindbar ist und wobei in Abhängigkeit eines Temperaturmesswerts des Temperaturfühlers die Längsposition des Ventilstifts (12) bestimmt ist.

12. Durchflussmengenreguliervorrichtung nach einem der Ansprüche 10 bis 11,
**dadurch gekennzeichnet, dass** der Ventilstift (12) des Temperaturregelmoduls (10) und/oder die Handhabe (16) durch einen Voreinstellstutzen (9) hindurch in das Gehäuse (1) geführt sind und/oder dass die Handhabe (16) den Ventilstift (12) mantelseitig umgreift.

13. Durchflussmengenreguliervorrichtung nach Anspruch 11 oder 12, **dadurch gekennzeichnet, dass** die Handhabe (16) drehbar in dem Modulgehäuse (11) des Temperaturregelmoduls (10) geführt ist und/oder dass das Modulgehäuse (11) an dem Gehäuse (1) festgelegt ist und/oder dass die Handhabe (16) als ein Teil des Temperaturregelmoduls (10) ausgeführt ist.

14. Durchflussmengenreguliervorrichtung nach einem der Ansprüche 1 bis 13,
**dadurch gekennzeichnet, dass** der Zulaufstutzen (2) und/oder die Zulauföffnung (3) und/oder der erste Durchflussspalt (40) und/oder der zweite Durchflussspalt (41) und/oder der Austrittsspalt (42) und/oder der Reguliereinsatz (24) und/oder die Durchgangsbohrung (25) und/oder der Reguliertopf (30) und/oder der Topfrand (31) und/oder die Regulierfeder (33) und/oder der Betätigungsring (34) und/oder die Modulgehäusehülse (21) und/oder der Gehäuseeinsatz (22) und/oder der Ventilstift (12) und/oder die Druckfeder (13) und/oder der Teller (14) und/oder die Dichtung (15) und/oder die Handhabe (6) koaxial zueinander und/oder zu einer Längsmittelachse (8) angeordnet sind.

15. Reguliereinrichtung für eine Durchflussmengenreguliervorrichtung nach einem der Ansprüche 10 bis 13, umfassend das Sekundärbetätigungsmodul und das Mengenreguliermodul (20), wobei das Sekundärbetätigungsmodul bevorzugt als Temperaturregelmodul (10) ausgebildet ist und die Handhabe (16) vorsieht.

## Claims

1. A flow rate regulating apparatus for a heating or cooling system, comprising
a housing (1) comprising an inlet port (2) having an inlet opening (3) for a working fluid, comprising a rate regulating module (20) provided in the housing (1) which is capable of altering a flow for the working fluid depending on a presetting and a pressure difference, and comprising a handle (16) cooperating with a regulating insert (24) of the rate regulating module (20) movably disposed in a module housing of the rate regulating module (20) for altering the presetting, the rate regulating module (20) providing for a regulating pan (30) held longitudinally displaceable relative to the regulating insert (24) and supported against the regulating insert (24) via a regulating spring (33) of the rate regulating module (20), having a closed pan bottom (32) facing the inlet opening and a pot edge (31) projecting from the pan bottom (32), and a first flow opening of varying size and a second flow opening pre-settable via the handle (6), wherein the second flow opening is formed as a second flow gap (41),
**characterized in that**
the first flow opening is formed as a first flow gap (40),
wherein the first flow gap (40) is disposed forward of the second flow gap (41) relative to a flow direction (4) of the working fluid, and wherein the first flow gap (40) is formed between the pan edge (31) and an inner lateral surface (23) of a functional component of the flow regulating module (20) facing the pan edge (31).

2. The flow rate regulating apparatus according to Claim 1, **characterized in that** the inner lateral surface (23) is tapered in the flow direction (4) of the working fluid, wherein the inner lateral surface (23) preferably has a conical shape and/or **in that** the inner lateral surface (23) has a profile, wherein, for profiling the inner lateral surface (23), preferably recesses are provided thereon, and more preferably splined recesses (38).

3. The flow rate regulating apparatus according to Claim 1 or 2, **characterized in that** the first flow gap (40) and/or the second flow gap (41) are formed as a first annular gap and/or second annular gap, and/or the first flow gap (40) and/or the second flow gap (41) are disposed co-axially to one another, and/or the first flow gap (40) and/or the second flow gap (41) have an annular segment configuration and/or are formed by a plurality of annular segments.

4. The flow rate regulating apparatus according to any one of Claims 1 to 3, **characterized in that** the regulating insert (24) provides for a through hole (25) which extends from a fluid chamber disposed rearward of the second flow gap (41) relative to the flow direction (4) of the working fluid to an interior of the regulating pan (30), and/or the through hole (25) is elongated in the flow direction (4).

5. The flow rate regulating apparatus according to any one of Claims 1 to 4, **characterized in that** an outer lateral surface of the regulating pan (30) formed by the pan edge (31) and facing the inner lateral surface (23) has a cylindrical shape, and/or in that the regulating spring (33) is provided in the regulating pan (30) and the pan edge (31) surrounds the regulating spring (33) on the lateral side.

6. The flow rate regulating apparatus according to any one of Claims 1 to 5, **characterized in that** the module housing of the rate regulating module (20) is formed from multiple parts and provides for an outer module housing sleeve (21) and a housing insert (22), the module housing sleeve (21) at least partially surrounding the housing insert (22) on the lateral side and/or the housing insert (22) providing the inner lateral surface (23) as a functional component of the rate regulating module (20).

7. The flow rate regulating apparatus of Claim 6, **characterized in that** the regulating insert (24) partially has a conical recess, and the second flow gap (41) is formed between the conical recess of the regulating insert (24) and the module housing of the rate regulating module (20), and/or **in that** the second flow gap (41) is formed between the conical recess of the regulating insert (24) and the housing insert (22).

8. The flow rate regulating apparatus according to any one of Claims 1 to 7, **characterized in that** the regulating insert (24) provides for a plurality of threaded annular segments (27) supported by flanges (28), wherein the threaded annular segments (27) provide for an outer thread engaging a correspondingly formed inner thread of the rate regulating module (20), and wherein engagement recesses (29) are provided between adjacent flanges (28) and/or adjacent threaded annular segments (27) of the regulating insert (24), and/or **in that** the rate regulating module (20) provides for an actuating ring (34) supported on the module housing having actuating fingers (35) projecting therefrom, wherein the actuating ring (34) is operably connected to the handle (16), and the actuating fingers engage the engagement recesses (29) for transferring an actuation of the handle (16) to the regulating insert (24).

9. The flow rate regulating apparatus according to any one of Claims 1 to 8, **characterized in that** the housing insert (22) of the module housing provides for the inner thread of the rate regulating module (20).

10. The flow rate regulating apparatus according to any one of Claims 1 to 9, **characterized in that** a secondary actuating module is provided which provides for a valve pin (12) longitudinally displaceable relative to a module housing (11) of the secondary actuating module against a compression spring (13) and a disc (14) held on an end of the valve pin (12) facing the rate regulating module (20), and a seal (15) fixed to the disc (14), wherein an exit gap (42) is formed between the seal (15) of the temperature regulating module (10) and the actuating ring (34) of the rate regulating module (20), and wherein a size of the exit gap (42) is adjustable depending on a longitudinal position of the valve pin (12).

11. The flow rate regulating apparatus according to Claim 10, **characterized in that** a temperature regulating module (10) is provided as the secondary actuating module, wherein the valve pin (12) is connectable to a temperature sensor, and wherein the longitudinal position of the valve pin (12) is determined depending on a temperature measurement value of the temperature sensor.

12. The flow rate regulating apparatus according to any one of Claims 10 or 11, **characterized in that** the valve pin (12) of the temperature regulating module (10) and/or the handle (16) are inserted through a presetting port (9) into the housing (1), and/or **in that** the handle (16) surrounds the valve pin (12) on the lateral side.

13. The flow rate regulating apparatus according to Claim 11 or 12, **characterized in that** the handle (16) is rotatably guided in the module housing (11) of the temperature regulating module (10), and/or **in that** the module housing (11) is fixed to the housing (1), and/or **in that** the handle (16) is embodied as a part of the temperature regulating module (10).

14. The flow rate regulating apparatus according to any one of Claims 1 to 13, **characterized in that** the inlet port (2) and/or the inlet opening (3) and/or the first flow gap (40) and/or the second flow gap (41) and/or the exit gap (42) and/or the regulating insert (24) and/or the through hole (25) and/or the regulating pan (30) and/or the pan edge (31) and/or the regulating spring (33) and/or the actuating ring (34) and/or the module housing sleeve (21) and/or the housing insert (22) and/or the valve pin (12) and/or the compressing spring (13) and/or the disc (14) and/or the seal (15) and/or the handle (6) are disposed co-axially to one another and/or to a longitudinal central axis (8).

15. A regulating means for a flow rate regulating apparatus according to any one of Claims 10 to 13, comprising the secondary actuating module and the rate regulating module (20), preferably wherein the secondary actuating module is formed as a temperature regulating module (10) and provides for the handle (16).

## Revendications

1. Dispositif de régulation de débit pour une installation de chauffage ou de réfrigération, comprenant
un boîtier (1), comprenant un manchon d'arrivée (2) pourvu d'une ouverture d'arrivée (3) pour un fluide de travail, comprenant un module de régulation de quantité (20) prévu dans le boîtier (1) et qui peut modifier un écoulement pour le fluide de travail en fonction d'un préréglage et d'une différence de pression, et comprenant une manette (16) qui coopère avec un insert de régulation (24) du module de régulation de quantité (20), disposé de manière mobile dans un boîtier de module du module de régulation de quantité (20), pour modifier le préréglage, dans lequel le module de régulation de quantité (20) prévoit un pot de régulation (30) maintenu de manière à pouvoir être déplacé longitudinalement par rapport à l'insert de régulation (24) et soutenu par l'intermédiaire d'un ressort de régulation (33) du module de régulation de quantité (20) contre l'insert de régulation (24), pourvu d'un fond de pot fermé (32), tourné vers l'ouverture d'arrivée, et d'un bord de pot (31) faisant saillie à partir du fond de pot (32), ainsi qu'une première ouverture d'écoulement de dimension variable et une deuxième ouverture d'écoulement préréglable par l'intermédiaire de la manette (6), dans lequel la deuxième ouverture d'écoulement est réalisée sous la forme d'une deuxième fente d'écoulement (41),
**caractérisé en ce que** la première ouverture d'écoulement est formée sous la forme d'une première fente d'écoulement (40),
dans lequel la première fente d'écoulement (40), par rapport à une direction d'écoulement (4) du fluide de travail, est disposée avant la deuxième fente d'écoulement (41), et dans lequel la première fente d'écoulement (40) est formée entre le bord de pot (31) et une surface latérale intérieure (23), tournée vers le bord de pot (31), d'un composant fonctionnel du module de régulation de quantité (20).

2. Dispositif de régulation de débit selon la revendication 1, **caractérisé en ce que** la surface latérale intérieure (23) se rétrécit dans la direction d'écoulement (4) du fluide de travail, dans lequel la surface latérale intérieure (23) est de préférence réalisée de manière conique, et/ou **en ce que** la surface latérale intérieure (23) est réalisée de manière profilée, dans lequel de préférence des formations, et en particulier de préférence des formations cannelées (38), sont prévues sur celle-ci pour le profilage de la surface latérale intérieure (23).

3. Dispositif de régulation de débit selon la revendication 1 ou 2, **caractérisé en ce que** la première fente d'écoulement (40) et/ou la deuxième fente d'écoulement (41) sont réalisées sous la forme d'une première fente annulaire et/ou d'une deuxième fente annulaire, et/ou **en ce que** la première fente d'écoulement (40) et/ou la deuxième fente d'écoulement (41) sont disposées de manière coaxiale l'une par rapport à l'autre, et/ou **en ce que** la première fente d'écoulement (40) et/ou la deuxième fente d'écoulement (41) sont réalisées en forme de segment annulaire et/ou sont formées par une pluralité de segments annulaires.

4. Dispositif de régulation de débit selon l'une quelconque des revendications 1 à 3, **caractérisé en ce que** l'insert de régulation (24) prévoit un alésage de passage (25) qui conduit d'un espace de fluide disposé après la deuxième fente d'écoulement (41), par rapport à la direction d'écoulement (4) du fluide de travail, à un espace intérieur du pot de régulation (30), et/ou **en ce que** l'alésage de passage (25) est allongé dans la direction d'écoulement (4).

5. Dispositif de régulation de débit selon l'une quelconque des revendications 1 à 4, **caractérisé en ce qu'**une surface latérale extérieure, formée par le bord de pot (31) et tournée vers la surface latérale intérieure (23), du pot de régulation (30) est formée de manière cylindrique, et/ou **en ce que** le ressort de régulation (33) est prévu dans le pot de régulation (30) et saisit le bord de pot (31) du ressort de régulation (33) côté enveloppe.

6. Dispositif de régulation de débit selon l'une quelconque des revendications 1 à 5, **caractérisé en ce que** le boîtier de module du module de régulation de quantité (20) est réalisé en plusieurs parties et prévoit une douille de boîtier de module extérieure (21) et un insert de boîtier (22), dans lequel la douille de boîtier de module (21) saisit l'insert de boîtier (22) dans tous les cas par endroits côté enveloppe, et/ou l'insert de boîtier (22) en tant que composant fonctionnel du module de régulation de quantité (20) fournit la surface latérale intérieure (23).

7. Dispositif de régulation de débit selon la revendication 6, **caractérisé en ce que** l'insert de régulation (24) est façonné par endroits en forme de cône, et la deuxième fente d'écoulement (41) est formée entre la formation conique de l'insert de régulation (24) et le boîtier de module du module de régulation de quantité (20), et/ou **en ce que** la deuxième fente d'écoulement (41) est formée entre la formation conique de l'insert de régulation (24) et l'insert de boîtier (22).

8. Dispositif de régulation de débit selon l'une quelconque des revendications 1 à 7, **caractérisé en ce que** l'insert de régulation (24) prévoit une pluralité de segments de bague filetée (27) maintenus par des entretoises (28), dans lequel les segments de bague filetée (27) prévoient un filetage mâle venant en prise avec un filetage femelle de forme correspondante du module de régulation de quantité (20), et dans lequel des évidements de mise en prise (29) sont prévus entre des entretoises voisines (28) et/ou des segments de bague filetée voisins (27) de l'insert de régulation (24), et/ou **en ce que** le module de régulation de quantité (20) prévoit une bague d'actionnement (34) soutenue par le boîtier de module, pourvue de doigts d'actionnement (35) faisant saillie à partir de celle-ci, dans lequel la bague d'actionnement (34) est en liaison active avec la manette (16) et les doigts d'actionnement (35) viennent en prise dans les évidements de mise en prise (29) pour transmettre un actionnement de la manette (16) à l'insert de régulation (24).

9. Dispositif de régulation de débit selon l'une quelconque des revendications 1 à 8, **caractérisé en ce que** l'insert de boîtier (22) du boîtier de module fournit le filetage femelle du module de régulation de quantité (20).

10. Dispositif de régulation de débit selon l'une quelconque des revendications 1 à 9, **caractérisé en ce qu'**un module d'actionnement secondaire est prévu qui prévoit une tige de soupape (12) pouvant être déplacée longitudinalement par rapport à un boîtier de module (11) du module d'actionnement secondaire contre un ressort de compression (13), et un plateau (14) maintenu à une extrémité de la tige de soupape (12) tournée vers le module de régulation de quantité (20), ainsi qu'un joint d'étanchéité (15) calé contre le plateau (14),
dans lequel une fente de sortie (42) est formée entre le joint d'étanchéité (15) du module de régulation de température (10) et la bague d'actionnement (34) du module de régulation de quantité (20), et dans lequel une dimension de la fente de sortie (42) est réglable en fonction d'une position longitudinale de la tige de soupape (12).

11. Dispositif de régulation de débit selon la revendication 10, **caractérisé en ce qu'**un module de régulation de température (10) est prévu sous forme de module d'actionnement secondaire, dans lequel la tige de soupape (12) peut être reliée à une sonde de température, et dans lequel la position longitudinale de la tige de soupape (12) est déterminée en fonction d'une valeur de mesure de température de la sonde de température.

12. Dispositif de régulation de débit selon l'une quelconque des revendications 10 à 11, **caractérisé en ce que** la tige de soupape (12) du module de régulation de température (10) et/ou la manette (16) sont guidées dans le boîtier (1) à travers un manchon de préréglage (9), et/ou **en ce que** la manette (16) saisit la tige de soupape (12) côté enveloppe.

13. Dispositif de régulation de débit selon la revendication 11 ou 12, **caractérisé en ce que** la manette (16) est guidée en rotation dans le boîtier de module (11) du module de régulation de température (10), et/ou **en ce que** le boîtier de module (11) est calé contre le boîtier (1), et/ou **en ce que** la manette (16) est réalisée comme une partie du module de régulation de température (10).

14. Dispositif de régulation de débit selon l'une quelconque des revendications 1 à 13, **caractérisé en ce que** le manchon d'arrivée (2) et/ou l'ouverture d'arrivée (3) et/ou la première fente d'écoulement (40) et/ou la deuxième fente d'écoulement (41) et/ou la fente de sortie (42) et/ou l'insert de régulation (24) et/ou l'alésage de passage (25) et/ou le pot de régulation (30) et/ou le bord de pot (31) et/ou le ressort de régulation (33) et/ou la bague d'actionnement (34) et/ou la douille de boîtier de module (21) et/ou l'insert de boîtier (22) et/ou la tige de soupape (12) et/ou le ressort de compression (13) et/ou le plateau (14) et/ou le joint d'étanchéité (15) et/ou la manette (6) sont disposés de manière coaxiale les uns par rapport aux autres et/ou à un axe central longitudinal (8).

15. Dispositif de régulation destiné à un dispositif de régulation de débit selon l'une quelconque des revendications 10 à 13, comprenant un module d'actionnement secondaire et le module de régulation de quantité (20), dans lequel le module d'actionnement secondaire est de préférence réalisé sous forme de module de régulation de température (10) et prévoit la manette (16) .
